# EUROPEAN PATENT APPLICATION

(11) **EP 4 362 172 A1**
(43) Date of publication of application: **01.05.2024**
(21) Application number: 23168630.4
(22) Date of filing: 19.04.2023
(51) Int. Cl.: H01M 10/613, H01M 10/615, H01M 10/647, H01M 10/653, H01M 10/6557, H01M 10/658, H01M 50/103, H01M 50/209

(54) **BATTERY ASSEMBLY**

(30) Priority: 27.10.2022 CN 202211328352
(71) Applicant: CALB Group Co., Ltd., Changzhou City, Jiangsu Province (CN)
(72) Inventor: ZHAO, Dong, Changzhou City, Jiangsu Province (CN)
(74) Representative: Becker, Eberhard

(57) **Abstract**

Provided is a battery assembly, which includes: a battery unit (10), which includes a plurality of single cells (11), and a stacking direction of the plurality of single cells (11) is perpendicular to large surfaces (111) of the single cells (11); a separation unit (20), which is arranged between two adjacent single cells (11), two opposite sides of the separation unit (20) include a heat exchange surface (21) and a heat insulating surface (22), the heat exchange surface (21) and the heat insulating surface (22) are respectively in contact with the large surfaces (111) of two adjacent single cells (11) so that the separation unit (20) is in thermally exchanging contact with the large surface (111) of one single cell (11) and in thermally insulating contact with the large surface (111) of the other single cell (11).

## Description

### BACKGROUND

### Technical Field

The disclosure relates to the technical field of batteries, in particular to a battery assembly.

### Description of Related Art

In related technologies, a battery assembly may include multiple batteries, and a large amount of heat might be generated during charging and discharging of the battery assembly, thus requiring timely cooling of the battery assembly. However, in some cases, battery safety issues are likely to arise.

### SUMMARY

The disclosure provides a battery assembly, including: a battery unit, which includes a plurality of single cells, and a stacking direction of the plurality of single cells is perpendicular to large surfaces of the single cells; a separation unit, which is arranged between two adjacent single cells, two opposite sides of the separation unit include a heat exchange surface and a heat insulating surface, the heat exchange surface and the heat insulating surface are respectively in contact with the large surfaces of two adjacent single cells so that the separation unit is in thermally exchanging contact with the large surface of one single cell and in thermally insulating contact with the large surface of the other single cell.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a partial structural view of a battery assembly according to an exemplary embodiment.
FIG. 2 is a structural view of a battery assembly according to another exemplary embodiment.
FIG. 3 is a partial structural view of a battery assembly according to an exemplary embodiment.
FIG. 4 is a partial structural view of a battery assembly according to another exemplary embodiment.
FIG. 5 is a structural view of a first viewing angle of a separation unit of a battery assembly according to the first exemplary embodiment.
FIG. 6 is a structural view of a second viewing angle of a separation unit of a battery assembly according to the first exemplary embodiment.
FIG. 7 is a structural view of a third viewing angle of a separation unit of a battery assembly according to the first exemplary embodiment.
FIG. 8 is a structural view of a single cell of a battery assembly according to an exemplary embodiment.
FIG. 9 is a schematic view of a cooperation structure of a separation unit of a battery assembly and a metal part according to an exemplary embodiment.
FIG. 10 is a structural view of a separation unit of a battery assembly according to the second exemplary embodiment.
FIG. 11 is a structural view of a separation unit of a battery assembly according to the third exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

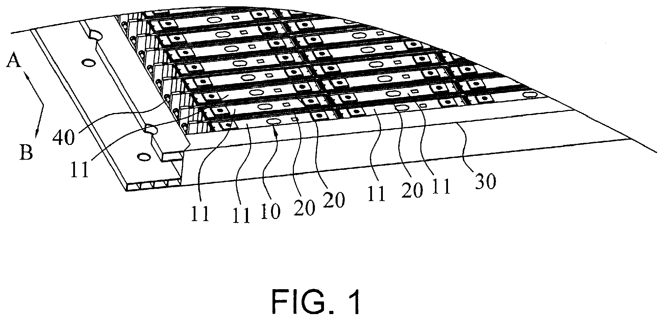

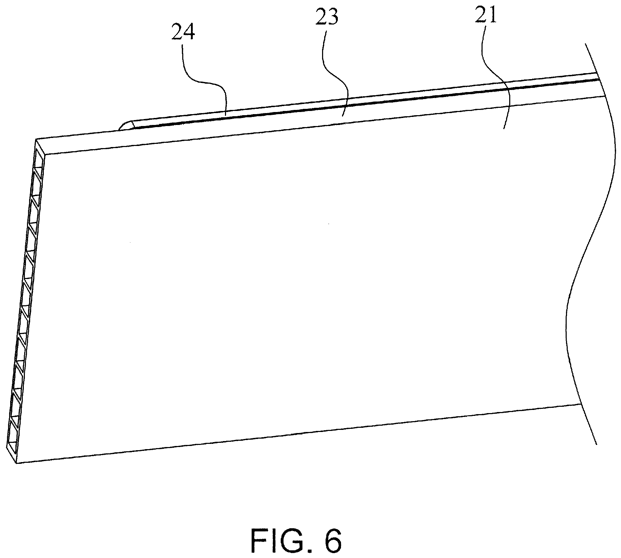

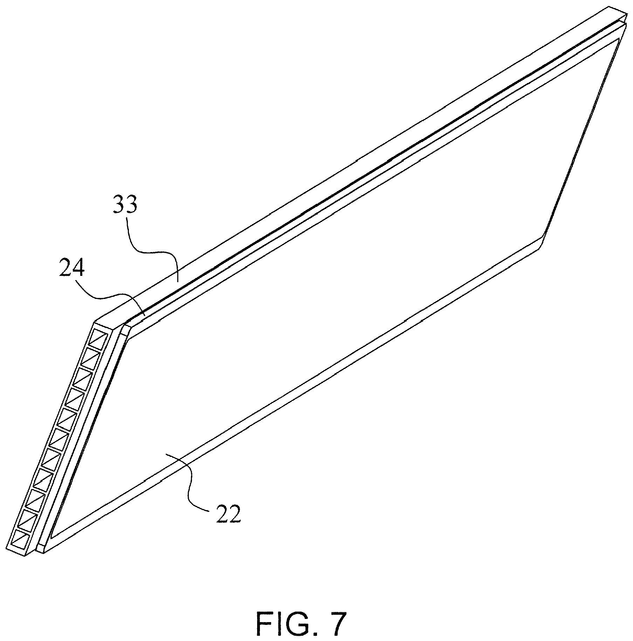

An embodiment of the present disclosure provides a battery assembly, please refer to FIG. 1 to FIG. 8. The battery assembly includes: a battery unit 10, the battery unit 10 includes a plurality of single cells 11, and a stacking direction of the plurality of single cells 11 is perpendicular to large surfaces 111 of the single cells 11; a separation unit 20, the separation unit 20 is arranged between two adjacent single cells 11, and two opposite sides of the separation unit 20 include a heat exchange surface 21 and a heat insulating surface 22, the heat exchange surface 21 and the heat insulating surface 22 are respectively in contact with the large surfaces 111 of two adjacent single cells 11, so that the separation unit 20 is in heat exchanging contact with the large surface 111 of one single cell 11 and in thermally insulating contact with the large surface 111 of the other single cell 11.

The battery assembly in an embodiment of the disclosure includes a battery unit 10 and a separation unit 20. The battery unit 10 includes a plurality of single cells 11, and a stacking direction of the plurality of single cells 11 is perpendicular to large surfaces 111 of the single cells 11, so that the stacking capacity of the single cells 11 may be improved. The separation unit 20 is arranged between two adjacent single cells 11. By setting two opposite sides of the separation unit 20 to include a heat exchange surface 21 and a heat insulating surface 22, the heat exchange surface 21 and the heat insulating surface 22 are respectively in contact with the large surfaces 111 of two adjacent single cells 11 so that the separation unit 20 is in thermally exchanging contact with the large surface 111 of one single cell 11 and in thermally insulating contact with the large surface 111 of the other single cell 11. As such, the heat transfer rate of the battery assembly is improved to achieve rapid heating or cooling of the battery assembly, thus improving the overall safety performance of the battery assembly and ensure better overall consistency of the battery assembly while increasing battery life. Moreover, it is possible to avoid a large amount of heat energy transfer between two adjacent single cells 11. Therefore, it is possible to prevent occurrence of thermal runaway of another single cell 11 after the thermal runaway of one single cell 11 has occurred, thereby improving the safety performance of the battery assembly.

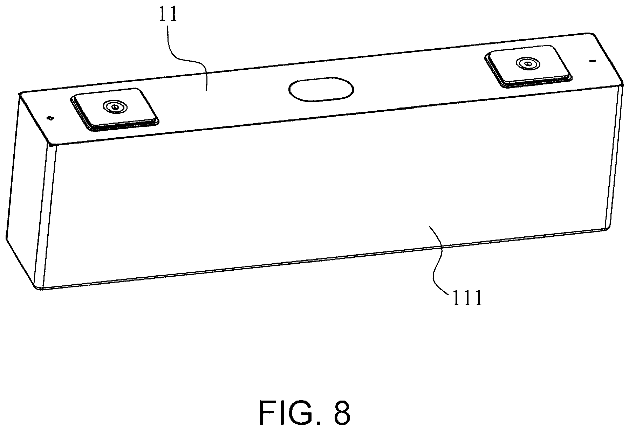

It should be noted that the large surface 111 of the single cell 11 may be considered as the surface where the battery generates the most heat. Further, the large surface 111 of the single cell 11 may be the surface with the largest area of the single cell 11. For example, referring to FIG. 8, when the single cell 11 is a square battery, a surface of the square battery with the largest area may be set as the large surface 111 of the single cell 11. The number of the large surface 111 of the single cell 11 may be two. By making the heat exchange surface 21 of the separation unit 20 to be in contact with the large surface 111 of a single cell 11, it is possible for the separation unit 20 to realize rapid cooling of the single cell 11, thereby avoiding the problem of thermal runaway of the single cell 11. By making the heat insulating surface 22 of the separation unit 20 to be in contact with the large surface 111 of the other unit cell 11, it is possible to prevent the heat of one single cell 11 from being transferred to the other single cell 11, thus avoiding a large amount of heat transfer between the single cells 11. In this manner, the problem of thermal runaway caused by a large amount of heat accumulated on a single cell 11 may be avoided, thereby improving the safety performance of the battery.

The large surface 111 of the single cell 11 is in contact with the heat exchange surface 21 of the partition unit 20, so that the heat exchange rate of the single cell 11 may be significantly improved. In the related art, when thermal runaway occurs in a single cell 11, the cooling rate of the heat exchange structure with respect to the single cell is lower than the heat transfer rate of the heat exchange structure, and therefore thermal runaway is more likely to occur to adjacent single cells. In this embodiment, by making the heat insulating surface 22 of the separation unit 20 to be in contact with another single cell 11, the heat of the single cell 11 in which thermal runaway occurs may be prevented from being transferred to another single cell 11, thus effectively avoiding the chain reaction of thermal runaway.

The heat exchange surface 21 is in contact with the large surface 111 of the single cell 11, that is, the heat exchange surface 21 and the large surface 111 of the single cell 11 may be in direct contact, or the heat exchange surface 21 and the large surface 111 of the single cell 11 may be in indirect contact. The heat exchange surface 21 and the large surface 111 of the single cell 11 may be in indirect contact through other structures, for example, the heat exchange surface 21 and the large surface 111 of the single cell 11 may be in contact through insulating parts, adhesives or cushioning parts and the like.

Correspondingly, the heat insulating surface 22 is in contact with the large surface 111 of the single cell 11, that is, the heat insulating surface 22 may be in direct contact with the large surface 111 of the single cell 11, or the heat insulating surface 22 and the large surface 111 of the single cell 11 may be in indirect contact. The heat insulating surface 22 and the large surface 111 of the single cell 11 may be in indirect contact through other structures, for example, the heat insulating surface 22 and the large surface 111 of the single cell 11 may be in contact through insulating parts, adhesives or cushioning parts and the like.

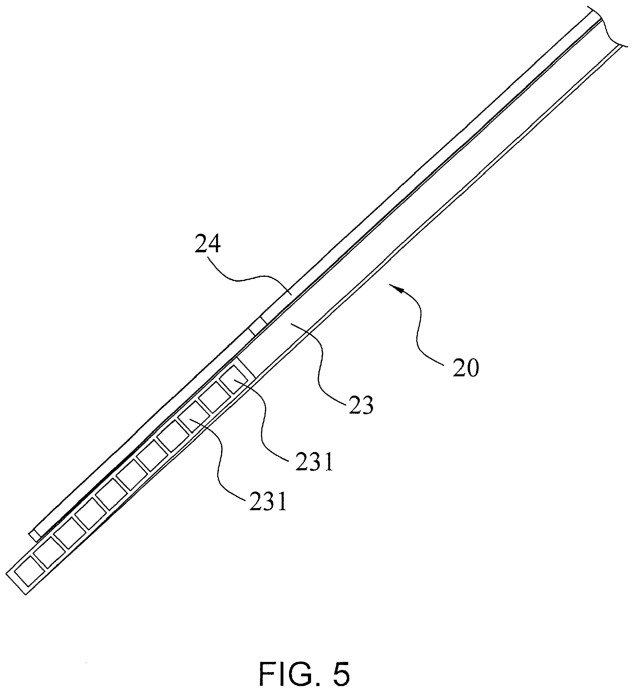

In an embodiment, as shown in FIG. 5 to FIG. 7, the separation unit 20 includes: a heat conducting element 23, the heat conducting element 23 has a heat exchange surface 21; a heat insulating element 24, the heat insulating element 24 has a heat insulating surface 22, so that the separation unit 20 realizes reliable heat exchange for the corresponding single cell 11 through the heat conducting element 23, and the separation unit 20 realizes heat insulation between two adjacent single cells 11 through the heat insulating element 24, thereby improving the safe operation performance of the battery.

In an embodiment, the heat conducting element 23 is connected with the heat insulating element 24, so as to improve the stability of the separation unit 20, and avoid the problem of instability between the heat conducting element 23 and the heat insulating element 24. As such, it is possible to avoid the problem of connection failure of the heat conducting element 23 or the heat insulating element 24, thereby ensuring the safety performance of the battery assembly.

It should be noted that the heat conducting element 23 and the heat insulating element 24 may be directly connected. For example, the heat conducting element 23 and the heat insulating element 24 may be bonded; or the heat conducting element 23 and the heat insulating element 24 may be indirectly connected. For example, there may be other structures disposed between the heat conducting element 23 and the heat insulating element 24. For example, a buffer structure may be arranged between the heat conducting element 23 and the heat insulating element 24, and both the heat conducting element 23 and the heat insulating element 24 are bonded to the buffer structure. Alternatively, the heat conducting element 23 and the heat insulating element 24 may be reliably connected through the squeezing force between two adjacent single cells 11. For example, at least one of the heat conducting element 23 and the heat insulating element 24 may be an elastic member, thereby ensuring reliable connection between the heat conducting element 23 and the heat insulating element 24 through squeezing force.

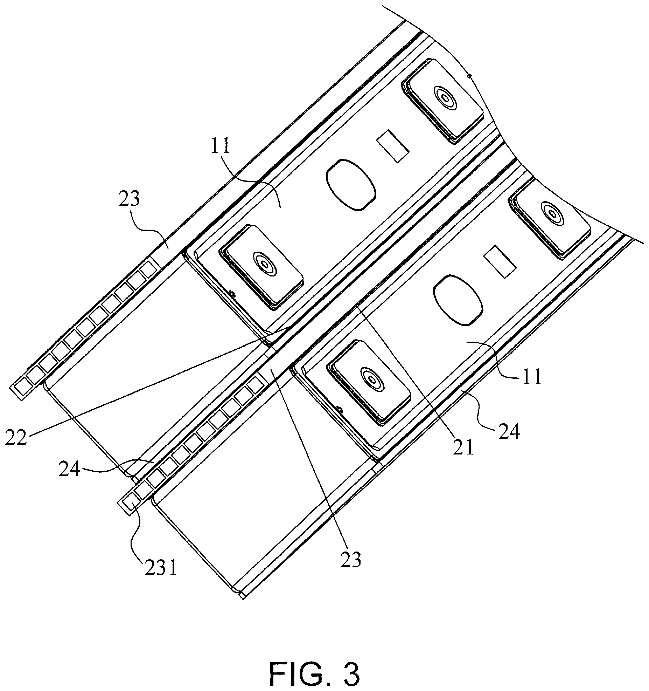

In an embodiment, the heat conducting element 23 may be a metal plate. As shown in FIG. 3 and FIG. 5, a channel 231 may be formed inside the metal plate, and the channel 231 may be a heat exchange channel, and gas or liquid may flow through the channel 231, or a phase change material may be provided in the channel 231.

As shown in FIG. 1, the battery assembly may introduce gas or liquid into the channel 231 through a heat exchange pipeline 40, so as to realize the circulation of gas or liquid. Regarding the specific structure of the heat exchange pipeline 40 and the channel 231, the disclosure provides no limitation thereto.

The heat conducting element 23 may also be a heat conducting pad, for example, the heat conducting element may be a graphene sheet, a heat conducting silica gel sheet, or a heat conducting insulating elastic rubber sheet or the like.

The heat insulating element 24 may be an airgel pad, a foam part, a glass fiber part, an asbestos part, a ceramic paper part, or the like. Alternatively, the heat insulating element 24 may be a heat insulating coating. For example, a heat insulating coating is directly coated on the surface of the heat conducting element 23, and a ceramic coating may be coated on the surface of the heat conducting element 23, or the heat insulating element 24 may include a metal part, and a heat insulating coating is coated on the surface of the metal part.

In an embodiment, the heat conducting element 23 is a heating film. For example, the heating film may be a graphene heating film, a PET heating film or a P1 heating film, etc., which not only has a simple structure, but also ensures good heating performance. In the early stage, the battery assembly may use the heating film to rapidly raise the temperature of the single cell 11, or, when the ambient temperature is low, the heating film may also be used to heat the single cell 11.

In an embodiment, the heat conducting element 23 may include a metal plate and a heating film, so as to improve the heat exchange capacity of the battery assembly. For example, a channel 231 is provided inside the metal plate, and the channel 231 may be a cooling channel. After the battery is used for a long time, the metal plate may be used for cooling, and the heating film may be heated according to the usage requirements of the battery assembly, so as to meet the usage requirements of the battery assembly.

In an embodiment, the battery assembly further includes a metal part 50, which is arranged on one side of the heat insulating element 24 away from the heat conducting element 23, so that the heat insulating surface 22 is in contact with the large surface 111 of the single cell 11 through the metal part 50. In this way, it is possible to increase the isolation distance between the heat insulating element 24 and the single cell 11, thereby improving the safety performance of the battery assembly.

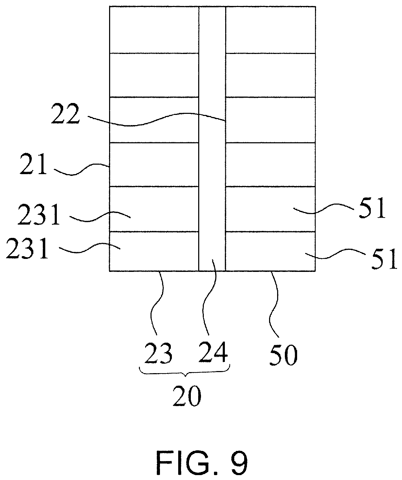

The metal part 50 may be used for heat exchange. As shown in FIG. 9, the heat conducting element 23 is a metal plate, and a channel 231 is formed inside the metal plate, and a cavity 51 is formed inside the metal part 50. The channel 231 may be a heat exchange channel, and the cavity 51 may also be a heat exchange channel, and gas, liquid, or phase change materials may be provided inside the heat exchange channel.

There may be multiple channels 231 and multiple cavities 51. Alternatively, there may be one channel 231 and one cavity 51.

The metal part 50 may also be adopted for heat insulation. For example, the metal part 50 may be coated with a heat insulating coating, or the cavity 51 inside the metal part 50 may be filled with a heat insulating medium, for example, may be filled with an airgel, a foam or a glass fiber part, etc., or, the inside of the cavity 51 may also be filled with a liquid heat insulating medium or a gas heat insulating medium, etc., which are not limited in the disclosure.

In an embodiment, the heat insulating element 24 is a heat insulating coating or a heat insulating pad. On the basis of effectively blocking heat, it is also possible to ensure that the heat insulating element 24 has a relatively simple structure.

When the heat insulating element 24 is a heat insulating coating, the heat insulating coating may be directly coated on the heat conducting element 23. Of course, in some embodiments, it is not excluded that the heat insulating coating may be directly coated on the single cell 11, and a surface of the heat insulating coating in contact with the single cell 11 is the heat insulating surface 22, so that the heat insulating coating may effectively block the heat of the single cell 11.

When the heat insulating element 24 is a heat insulating pad, the heat insulating pad may be connected with the heat conducting element 23. For example, the heat insulating pad may be bonded on the heat conducting element 23, and a surface of the heat insulating pad in contract with the single cell 11 is the heat insulating surface 22, so that the heat insulating pad may effectively block the heat of the single cell 11.

In an embodiment, the heat insulating element 24 is a heat insulating coating, and the heat insulating coating is disposed on the outer surface of the heat conducting element 23 so as to be in contact with the large surface 111 of the single cell 11 to achieve a reliable heat-insulating effect.

In an embodiment, the heat insulating element 24 is a heat insulating pad, and the heat insulating pad is bonded to the heat conducting element 23. On the basis of ensuring the effective heat insulation of the heat insulating element 24, the connection stability between the heat conducting element 23 and the heat insulating element 24 may be ensured.

In an embodiment, the heat insulating element 24 includes a heat insulating pad and a heat insulating coating, and the heat insulating coating is disposed on the outer surface of the heat insulating pad and/or the outer surface of the heat conducting element 23. The co-arrangement of the heat insulating pad and the heat insulating coating may further increase the heat insulation capacity, thereby improving the safety performance of the battery, and can avoid the problem of inability to prevent heat when one of the heat insulating pad and the heat insulating coating is damaged.

The heat insulating coating may be coated on one side of the heat insulating pad facing the large surface 111 of the single cell 11, or the heat insulating coating may be coated on one side of the heat insulating pad facing the heat conducting element 23, or two opposite sides of the heat insulating pad may both have a heat insulating coating.

In an embodiment, the thermal conductivity of the heat insulating element 24 is ≤0.05 W/(m·k), so that the heat insulating element 24 may have a reliable heat insulating effect. Even if a single cell 11 encounters thermal runaway, it is also possible to effectively prevent heat from being transferred to another adjacent single cell 11, so as to avoid the chain reaction of thermal runaway, thereby improving the safety performance of the battery assembly.

The thermal conductivity of the thermal insulating element 24 may be 0.05 W/(m·k), 0.04 W/(m·k), 0.035 W/(m·k), 0.03 W/(m·k), 0.029W/(m·k), 0.028 W/(m·k), 0.025 W/(m·k), 0.024 W/(m·k), 0.023 W/(m·k), 0.022 W/(m·k), 0.021 W/(m·k), 0.02W/(m·k), 0.01 W/(m·k) or 0.004W/(m·k), etc.

In an embodiment, the thickness of the heat conducting element 23 is 3mm to 8mm. On the basis of ensuring that the heat conducting element 23 has a reliable heat exchange capability, it is possible to prevent the large thickness of the heat conducting element 23 from affecting the space utilization of the battery assembly, which ensures that the battery assembly has a reliable energy density.

The thickness of the heat conducting element 23 may be 3mm, 3.1mm, 3.2mm, 3.3mm, 3.4mm, 3.5mm, 4mm, 4.5mm, 5mm, 5.5mm, 6mm, 6.5mm, 7mm, 7.5mm, 7.6mm, 7.7mm, 7.8mm, 7.9mm or 8mm and so on.

In an embodiment, the thickness of the heat insulating element 24 is less than 5mm, thereby prevent the large thickness of the heat insulating element 24 from occupying a large grouping space, thereby improving the space utilization rate of the battery assembly, and thus improving energy density of the battery.

In an embodiment, the thickness of the heat insulating element 24 is ≤3mm, so as to further reduce the thickness of the heat insulating element 24 and improve the space utilization of the battery assembly.

In an embodiment, the thickness of the separation unit 20 is 4mm to 13mm. On the basis of ensuring that the separation unit 20 has reliable heat exchange and heat insulating capabilities, it is possible to prevent the separation unit 20 from occupying too much space, thereby increasing the space utilization of the battery assembly.

The thickness of the separation unit 20 may be 4mm, 4.1mm, 4.2mm, 4.3mm, 4.4mm, 4.5mm, 5mm, 5.5mm, 6mm, 6.5mm, 7mm, 7.5mm, 7.6mm, 7.7mm, 7.8mm, 7.9mm, 8mm, 8.5mm, 9mm, 9.5mm, 10mm, 10.5mm, 11mm, 11.5mm, 12mm, 12.5mm, 12.6mm, 12.7mm, 12.8mm, 12.9mm or 13mm and so on.

In an embodiment, at least one of the heat conducting element 23 and the heat insulating element 24 includes a buffer portion to absorb the expansion of the large surface 111 of the single cell 11, thereby ensuring the operation performance of the single cell 11.

After the single cell 11 has been used for a long time, the single cell 11 might have an expansion problem, especially on the large surface 111 of the single cell 11. Under the circumstances, by setting at least one of the heat conducting element 23 and the heat insulating element 24 to include a buffer portion, it is possible for the single cell 11 to press the buffer portion during the expansion process, so that the buffer portion can be compressed. That is, the buffer portion absorbs the expansion of the large surface 111 of the single cell 11, thereby ensuring that the single cell 11 may also exert its energy normally in the later stage, thus preventing safety risk from occurring due to expansion force that cannot be released.

When the heat conducting element 23 is a metal plate, the channel of the metal plate may be used as a buffer portion, that is, the channel 231 may be compressed to absorb the expansion of the large surface 111 of the single cell 11. When the heat insulating element 24 is a heat insulating pad, the heat insulating pad 24 may also utilize its own elastic ability to realize absorption of expansion of the large surface 111 of the single cell 11.

In an embodiment, along the configuration direction perpendicular to the stacking direction, the distance between the opposite ends of the heat insulating element 24 is greater than the distance between the opposite ends of the heat conducting element 23. On basis of ensuring that the heat insulating element 24 reliably blocks the heat, the thermal insulating element 24 with a relatively large size may also be used as a positioning structure, which not only facilitates the configuration of the separation unit 20 between the single cells 11, but also may be used as a positioning structure in the subsequent configuration process. Also, it is possible to avoid damage to the heat conducting element 23.

In an embodiment, as shown in FIG. 1, the battery assembly further includes a battery box 30, and the battery unit 10 is arranged in the battery box 30. The configuration direction is perpendicular to the bottom surface of the battery box 30, so that the heat insulating element 24 is connected to the bottom surface, and the heat conducting element 23 is spaced apart from the bottom surface, so that the heat insulating element 24 may be used as a positioning structure for positioning and connection with the battery box 30. The heat conducting element 23 may be suspended to prevent the battery box 30 from causing damage to the heat conducting element 23.

Along the configuration direction, one side of the heat insulating element 24 facing the bottom surface of the battery box 30 may be aligned with one side of the single cell 11 facing the bottom surface of the battery box 30. Or, one side of the heat insulating element 24 facing the bottom surface of the battery box 30 may be higher than one side of the single cell 11 facing the bottom surface of the battery box 30. Other connection structures may be provided between the single cell 11 and the bottom surface of the battery box 30, such as an adhesive layer. Alternatively, one side of the heat insulating element 24 facing the bottom surface of the battery box 30 may be lower than one side of the single cell 11 facing the bottom surface of the battery box 30. Other connection structures, such as an adhesive layer, may be provided between the heat insulating element 24 and the bottom surface of the battery box 30.

One side of the heat insulating element 24 facing the bottom surface of the battery box 30 is higher than one side of the heat conducting element 23 facing the bottom surface of the battery box 30, and the other side of the heat insulating element 24 away from the bottom surface of the battery box 30 may be aligned with the other side of the heat conducting element 23 away from the bottom surface of the battery box 30.

As shown in FIG. 1, the stacking direction of multiple single cells 11 of the battery unit 10 is denoted as A, and the configuration direction perpendicular to the stacking direction may be denoted as B. In this case, the configuration direction B may be the direction perpendicular to the bottom surface of the battery box 30.

It should be noted that a plurality of single cells 11 are arranged along the stacking direction, and the configuration direction is perpendicular to the stacking direction, and the configuration direction may be a direction perpendicular to the bottom surface of the battery box 30; or, the configuration direction may be a direction perpendicular to a side surface of the battery box 30. In this case, along the configuration direction perpendicular to the stacking direction, the distance between two opposite ends of the heat insulating element 24 is greater than the distance between two opposite ends of the heat conducting element 23, and the heat insulating element 24 may also be connected with a side surface of the battery box 30.

In some embodiments, it is not excluded that, along the configuration direction perpendicular to the stacking direction, the distance between two opposite ends of the heat insulating element 24 may be equal to the distance between two opposite ends of the heat conducting element 23, and the heat insulating element 24 may be staggered to the heat conducting element 23, so that the heat insulating element 24 may also be connected to the battery box 30, and the heat conducting element 23 may be spaced apart from the battery box 30.

Alternatively, it is not excluded that, along the configuration direction perpendicular to the stacking direction, the distance between two opposite ends of the heat insulating element 24 may be smaller than the distance between two opposite ends of the heat conducting element 23, and the heat insulating element 24 may be staggered to the heat conducting element 23, so that the heat insulating element 24 may also be connected with the battery box 30, and the heat conducting element 23 may be spaced apart from the battery box 30.

Alternatively, the distance between the two ends of the heat conducting element 23 facing the side wall of the battery box 30 may be greater than the distance between the two ends of the heat insulating element 24 facing the side wall of the battery box 30, so as to facilitate the connection between the heat conducting element 23 and the heat exchange pipeline 40.

It should be noted that the specific structure of the battery box 30 is not limited in the disclosure. The battery box 30 realizes the configuration of the single cells 11, and the battery box 30 may form a sealed space for supplying power to vehicles and the like. Alternatively, the battery box 30 may be communicated with the external environment for storage and the like.

In an embodiment, at least one of the heat exchange surface 21 and the heat insulating surface 22 is bonded and fixed on the large surface 111 of the single cell 11, so as to ensure that the separation unit 20 is stably arranged between two adjacent single cells 11, so as to ensure the safe performance of the battery.

The heat exchange surface 21 may be connected to the single cell 11 through a thermal conductive structural adhesive, and the heat insulating surface 22 may be connected to the single cell 11 through an airgel.

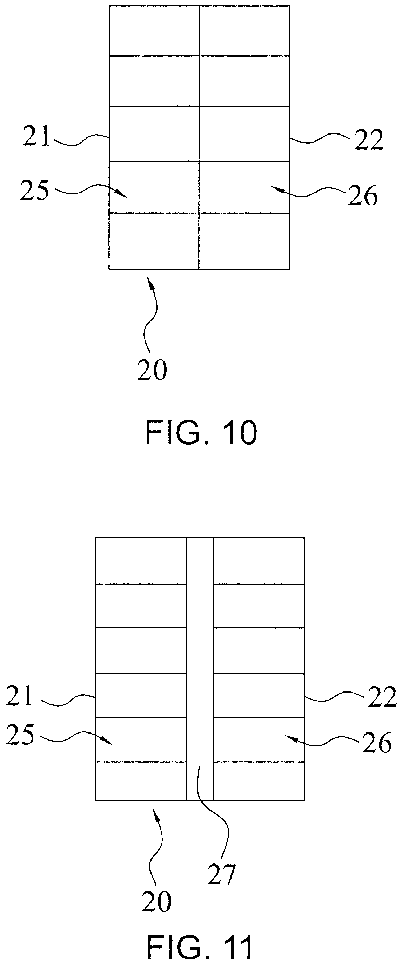

In an embodiment, as shown in FIG. 10, the separation unit 20 includes a metal structure, at least a first channel layer 25 and a second channel layer 26 are formed inside the metal structure. The first channel layer 25 and the second channel layer 26 are respectively the heat exchange channel and the heat insulating channel to form the heat exchange surface 21 and the heat insulating surface 22 respectively. That is, the heat exchange element and the heat insulating element may be formed through the channel inside the metal structure, which can not only meet the requirement of heat exchange and heat insulation, but also the structural stability of the metal structure is strong, thereby increasing the safety performance and service life of the battery assembly.

The metal structure may be an integral structure, and the first channel layer 25 and the second channel layer 26 may be formed on both sides of the metal structure respectively. For example, the first channel layer 25 and the second channel layer 26 may be formed respectively through a plurality of separated channels, as shown in FIG. 10. Of course, the first channel layer 25 and the second channel layer 26 may also be two large cavities respectively.

The first channel layer 25 is a heat exchange channel, and the inside of the heat exchange channel may be filled with heat exchange gas, heat exchange liquid, or phase change material.

The second channel layer 26 is a heat insulating channel, and the heat insulating channel is filled with a heat insulating medium, for example, may be filled with an airgel, a foam or a glass fiber part, etc., or the inside of the heat insulating channel may also be filled with liquid heat insulating medium or gas insulating medium, etc., which are not limited in the disclosure.

In an embodiment, as shown in FIG. 11, the separation unit 20 includes a metal structure, at least a first channel layer 25 and a second channel layer 26 are formed inside the metal structure. The first channel layer 25 and the second channel layer 26 are the heat exchange channel and the heat insulating channel respectively to form the heat exchange surface 21 and the heat insulating surface 22 respectively. There is a buffer portion 27 between the first channel layer 25 and the second channel layer 26, so that the expansion of the large surface 111 of the single cell 11 is absorbed by the buffer portion 27. Moreover, it is also possible to prevent the single cell 11 or the metal structure from being damaged due to pressing, thus ensuring the safety and operation performance of the single cell 11.

In an embodiment, there is no heat conducting element 23 provided between the heat insulating surface 22 and the large surface 111 of the single cell 11 on one side away from the heat exchange surface 21. That is, no matter whether the heat insulating surface 22 is in direct contact or indirect contact with the large surface 111 of the single cell 11, there is no heat conducting element 23 provided between the two, so as to reduce the number of components between the single cells 11, thereby increasing the energy density of the battery assembly.

In an embodiment, a heat conducting element 23 is provided between the heat insulating surface 22 and the large surface 111 of the single cell 11 on one side away from the heat exchange surface 21. That is, the heat insulating surface 22 and the large surface 111 of the single cell 11 may be in indirect contact, thereby increasing the heat exchange capacity of the single cell 11.

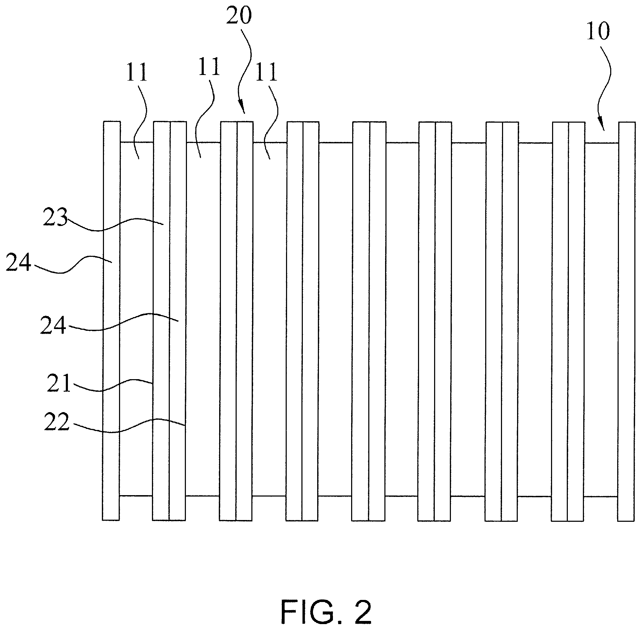

In an embodiment, as shown in FIG. 2, a separation unit 20 is provided between two adjacent single cells 11, so that the two opposite large surfaces 111 of the single cell 11 in the middle are respectively in contact with the heat exchange surface 21 and the heat insulating surface 22. On the basis of improving heat transfer rate of single cells 11, the heat insulation capability of the single cells 11 may be improved, thereby improving the safety and operation performance of the battery assembly.

When there are three or more single cells 11, there may be two or more separation units 20. For example, when there are three single cells 11, there are separation units 20 on both sides of a single cell 11 in the middle, and two opposite sides of the single cell 11 are respectively in contact with the heat exchange surface 21 and the heat insulating surface 22. Therefore, it can be understood that the arrangement of the plurality of separation units 20 is that the heat exchange surface 21 of each separation unit 20 faces the same direction, and each heat insulating surface 22 faces the same direction. Further, it may be regarded that the heat conducting element 23, the heat insulating element 24, the heat conducting element 23, and the heat insulating element 24 ... are arranged alternately, or the heat insulating element 24, the heat conducting element 23, the heat insulating element 24, and the heat conducting element 23 ... are arranged alternately.

As shown in FIG. 3, a separation unit 20 may be disposed between the two single cells 11, and a heat insulating element 24 and a heat conducting element 23 may be respectively provided on the other large surface 111 of the two single cells 11.

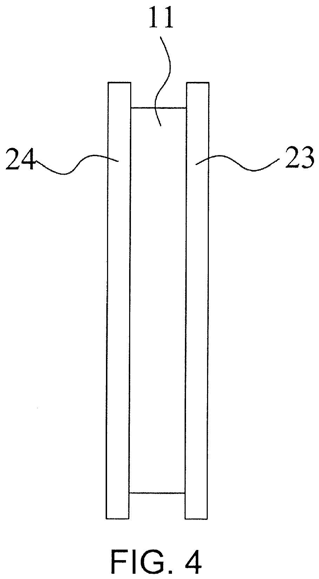

As shown in FIG. 4, the heat insulating element 24 and the heat conducting element 23 may be respectively provided on two opposite large surfaces 111 of the single cell 11.

In an embodiment, along the stacking direction, at least one of two opposite ends of the battery unit 10 is provided with the heat insulating element 24, so that the problem of rapid heat dissipation of the single cell 11 at the end portion may be avoided, thereby ensuring stability and balance of the overall battery unit 10, so that the battery assembly may be used in the best state.

In an embodiment, the single cell 11 is a lithium iron phosphate system battery, so heat preservation may be realized through the heat insulating element 24 provided at the end portion, so as to avoid the problem of excessive heat loss of the single cell 11 at the end portion, thereby ensuring the operation performance of the battery assembly.

The battery may be a lithium iron phosphate system battery, the energy density of the lithium iron phosphate system battery may be 120wh/kg to 190wh/kg, and the energy density of the lithium iron phosphate system battery may be 120wh/kg, 121wh/kg, 125wh/kg, 140wh/kg, 150wh/kg, 160wh/kg, 170wh/kg, 180wh/kg, 185wh/kg, 188wh/kg, 190wh/kg, etc.

In an embodiment, along the stacking direction, the heat conducting element 23 and the heat insulating element 24 are respectively provided at two opposite ends of the battery unit 10, so that the two opposite large surfaces 111 of each single cell 11 may be in contact with the heat conducting element 23 and the heat insulating element 24 respectively. On the basis of ensuring reliable heat exchange, the efficiency of heat insulation is further ensured, thereby ensuring the safety performance of the battery.

In an embodiment, along the stacking direction, the heat conducting element 23 or the heat insulating element 24 is not provided at the two opposite ends of the battery unit 10, so that the two single cells 11 located at the terminal end portions may exchange heat freely, thereby improving heat exchange capability of the battery unit 10, and thus improving the safety performance of the battery assembly.

In an embodiment, the heat conducting elements 23 are arranged between adjacent single cells 11, so that each heat conducting element 23 may dissipate heat reliably to each single cell 11, thereby ensuring the heat exchange capacity of the battery unit 10, and thus reducing the occurrence of thermal runaway in the single cell 11.

For example, there can be three or more single cells 11. For example, when there are three single cells 11, a separation unit 20 may be arranged between two single cells 11. The separation unit 20 includes the heat conducting element 23 and the heat insulating element 24, and there may be only the heat conducting element 23 arranged between the two single cells 11, that is, a partial structural arrangement of the battery assembly may be the single cell 11, the heat conducting element 23, the heat insulating element 24, the single cell 11, the heat conducting element 23, and the single cell 11.

When there are more than three single cells 11, a separation unit 20 may be provided between two adjacent single cells 11, or only the heat conducting element 23 may be provided between some single cells 11, which is not limited here.

In an embodiment, the heat insulating element 24 is arranged between adjacent single cells 11, and the number of the heat insulating element 24 is less than the number of the heat conducting element 23, so that the space of the battery assembly occupied by the heat insulating element 24 may be reduced, thereby improving the space utilization of the battery assembly, and the energy density of the battery assembly may be enhanced.

It should be noted that the heat insulating element 24 may not be set between any two adjacent single cells 11. After all, compared with the demand for heat dissipation, the demand for heat insulation may be relatively small. Under normal use of the battery assembly, the above arrangement is also sufficient to avoid chain reaction of thermal runaway problem caused by single cells 11.

In an embodiment, the heat conducting element 23 is arranged between adjacent single cells 11, and the heat insulating element 24 is arranged between adjacent single cells 11. The number of the heat insulating element 24 is less than the number of the heat conducting element 23, so that the heat conducting element 23 may realize reliable heat dissipation of the single cell 11, and the heat insulating element 24 may realize the heat blocking for part of the single cell 11, thereby improving the space utilization of the battery assembly, and ensuring the safety and operation performance of the battery.

It should be noted that the heat conducting element 23 and the heat insulating element 24 may not be provided between some single cells 11, or the heat conducting element 23 and the heat insulating element 24 may be provided between any two adjacent single cells 11. However, the heat conducting element 23 may be provided on a single cell 11 at the end portion, so that the number of the heat conducting elements 23 is greater than the number of the heat insulating elements 24.

In some embodiments, it is not excluded that the number of the heat insulating element 24 is greater than the number of the heat conducting element 23. For example, the heat conducting element 23 and the heat insulating element 24 may be arranged between any two adjacent single cells 11. However, the heat insulating element 24 may be set on a single cell 11 at the end portion.

In an embodiment, there is no heat insulating element 24 provided between at least part of the single cells 11 connected in parallel. When one of the single cells 11 connected in parallel is thermally out of control, heat will be transferred directly through the busbar, so the function served by the heat insulating element 24 is relatively minor. Accordingly, the heat insulating element 24 may be omitted, thereby improving the space utilization of the battery assembly.

It should be noted that each single cell 11 of a battery unit 10 may be partially connected in series and partially connected in parallel. There may be no heat insulating element 24 provided between the single cells 11 connected in parallel. Alternatively, each single cell 11 of a battery unit 10 may be connected in parallel, and there may be no heat insulating element 24 provided between part of the single cells 11 connected in parallel.

In some embodiments, each single cell 11 of a battery unit 10 may be connected in series.

In an embodiment, the battery assembly further includes a plurality of single cells 11 arranged in parallel, and there is no heat insulating element 24 arranged between at least part of the single cells 11 connected in parallel. That is, in addition to the battery unit 10, the battery assembly may further include a plurality of single cells 11 arranged in parallel, and at least part of the single cells 11 may not be provided with the heat insulating element 24.

In an embodiment, in addition to the battery unit 10, the battery assembly may further include a plurality of single cells 11 arranged in parallel, and the heat conducting element 23 is arranged between the single cells 11 connected in parallel, so as to ensure reliable heat exchange for the single cells 11, and thus improving the safety and operation performance of the battery assembly.

In an embodiment, when the heat insulating element 24 is not arranged between any adjacent single cells 11, the thickness of the heat insulating element 24 is ≥ 2mm, that is, providing a relatively small number of heat insulating element 24 may improve the utilization of the internal space of the battery assembly. Accordingly, the thickness of the heat insulating element 24 is increased, thereby improving the heat insulating ability of the heat insulating element 24.

In an embodiment, the single cell 11 adopts a ternary positive electrode material, that is, the single cell 11 may be a ternary system battery, so that good heat insulation and heat exchange may be achieved through the separation unit 20, thereby improving the safety performance of the battery assembly.

The single cell 11 may be a ternary system battery, the energy density of the ternary system battery may be 200wh/kg to 300wh/kg, and the energy density of the ternary system battery may be 200wh/kg, 201wh/kg, 210wh/kg, 220wh/kg, 230wh/kg, 240wh/kg, 248wh/kg, 250wh/kg, 260wh/kg, 270wh/kg, 280wh/kg, 290wh/kg, 295wh/kg, 298wh/kg, 300wh/kg, etc.

In some embodiments, the energy density of the ternary system battery may also be 190wh/kg to 200wh/kg. In some embodiments, it is not excluded that the energy density of the ternary system battery may also be less than 190 wh/kg.

It should be noted that the single cell includes a core and an electrolyte, the minimum unit capable of performing electrochemical reactions such as charging/discharging. The core refers to a unit formed by winding or laminating a stack portion including a first electrode sheet, a separator and a second electrode sheet. When the first electrode sheet is a positive electrode sheet, the second electrode sheet is a negative electrode sheet, and the polarities of the first electrode sheet and the second electrode sheet are interchangeable. The first electrode sheet and the second electrode sheet are coated with an active material.

In an embodiment, the single cell may be a square battery, that is, the single cell can be a quadrangular prism battery. The quadrangular prism battery mainly refers to a prism shape, but it is not strictly limited whether each side of the prism must be a straight line in a strict sense. The corners between sides are not necessarily right angles, but may be arc transitions.

The single cell may be a laminated battery, which is not only convenient for grouping, but also may be processed to obtain a longer battery. Specifically, the core is a laminated core, and the core has a first electrode sheet stacked on each other, a second electrode sheet electrically opposite to the first electrode sheet, and a separator sheet arranged between the first electrode sheet and the second electrode sheet, so that multiple pairs of the first electrode sheet and the second electrode sheet are stacked to form a laminated core.

Alternatively, the single cell may be a wound battery, that is, the first electrode sheet, the second electrode sheet electrically opposite to the first electrode sheet, and the separator sheet arranged between the first electrode sheet and the second electrode sheet are wound to obtain a wound core.

In an embodiment, the battery assembly is a battery module or a battery pack.

The battery module includes a plurality of single cells 11. The single cells 11 may be a square battery. The battery module may further include end plates and side plates, and the end plates and side plates are configured to fix the plurality of single cells 11.

The battery pack includes a plurality of single cells 11 and a battery box, and the battery box is configured to fix the plurality of single cells 11.

It should be noted that the battery pack includes the single cell 11, and there may be a plurality of single cells 11. The plurality of single cells 11 are placed in the battery box. Multiple single cells 11 may be placed in the battery box after forming a battery module. Alternatively, a plurality of single cells 11 may be directly disposed in the battery box, that is, it is not necessary to group the plurality of single cells 11 together, and the battery box may be used to fix the plurality of single cells 11.

In some embodiments, there may be multiple battery units 10, and one separation unit 20 may be shared between two adjacent single cells 11 in multiple battery units 10. For example, there may be two battery units 10. Therefore, one separation unit 20 may be clamped between two pairs of single cells 11, so as to facilitate the configuration of the separation unit 20.

Alternatively, there may be multiple battery units 10, and an independent separation unit 20 may be provided between two adjacent single cells 11 in each battery unit 10.

As shown in FIG. 1, there may be multiple battery units 10, and multiple battery units 10 are arranged in the battery box 30, and multiple battery units 10 may share the separation unit 20, and multiple battery units 10 may also share the heat exchange pipeline 40.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

## Claims

1. A battery assembly, comprising:
a battery unit (10), which comprises a plurality of single cells (11), and a stacking direction of the single cells (11) is perpendicular to large surfaces (111) of the single cells (11);
a separation unit (20), which is disposed between the two adjacent single cells (11), wherein two opposite sides of the separation unit (20) comprise a heat exchange surface (21) and a heat insulating surface (22), the heat exchange surface (21) and the heat insulating surface (22) are respectively in contact with the large surfaces (111) of the two adjacent single cells (11) so that the separation unit (20) is in thermally exchanging contact with the large surface (111) of one of the single cells (11) and in thermally insulating contact with the large surface (111) of the other of the single cells (11).

2. The battery assembly according to claim 1, wherein the separation unit (20) comprises:
a heat conducting element (23), which has the heat exchange surface (21);
a heat insulating element (24), which has the heat insulating surface (22);
wherein the heat conducting element (23) is connected with the heat insulating element (24).

3. The battery assembly according to claim 2, wherein the heat insulating element (24) is a heat insulating coating, and the heat insulating coating is disposed on an outer surface of the heat conducting element (23), or the heat insulating element (24) is a heat insulating pad, and the heat insulating pad is bonded to the heat conducting element (23), or the heat insulating element (24) comprises a heat insulating pad and a heat insulating coating, and the heat insulating coating is disposed on an outer surface of the heat insulating pad and/or the outer surface of the heat conducting element (23).

4. The battery assembly according to claim 2 or 3, wherein the heat conducting element (23) is a metal plate, a channel (231) is formed inside the metal plate, or the heat conducting element (23) is a heating film, or the heat conducting element (23) comprises the metal plate and the heating film.

5. The battery assembly according to claim 4, wherein the battery assembly further comprises a metal part (50), which is disposed on one side of the heat insulating element (24) away from the heat conducting element (23), so that the heat insulating surface (22) is in contact with the large surface (111) of the single cell (11) through the metal part (50);
wherein a cavity (51) is formed inside the metal part (50).

6. The battery assembly according to claim 2, wherein a thermal conductivity of the heat insulating element (24) is ≤0.05 W/(m·k).

7. The battery assembly according to claim 2, wherein a thickness of the heat conducting element (23) is 3mm to 8mm, and/or a thickness of the heat insulating element (24) is less than 5mm.

8. The battery assembly according to claim 7, wherein the thickness of the heat insulating element (24) is ≤3mm.

9. The battery assembly according to claim 2, wherein at least one of the heat conducting element (23) and the heat insulating element (24) comprises a buffer portion to absorb an expansion of the large surface (111) of the single cell (11).

10. The battery assembly according to claim 2, wherein along a configuration direction perpendicular the stacking direction, a distance between two opposite ends of the heat insulating element (24) is greater than a distance between two opposite ends of the heat conducting element (23).

11. The battery assembly according to claim 10, wherein the battery assembly further comprises a battery box, and the battery unit (10) is disposed in the battery box;
wherein the configuration direction is perpendicular to a bottom surface of the battery box, so that the heat insulating element (24) is connected to the bottom surface, and the heat conducting element (23) is spaced apart from the bottom surface.

12. The battery assembly according to claim 1, wherein the separation unit (20) comprises a metal structure, at least a first channel layer (25) and a second channel layer (26) are formed inside the metal structure, the first channel layer (25) and the second channel layer (26) are respectively a heat exchange channel and a heat insulating channel to form the heat exchange surface (21) and the heat insulating surface (22) respectively;
or, the separation unit (20) comprises a metal structure, at least a first channel layer (25) and a second channel layer (26) are formed inside the metal structure, the first channel layer (25) and the second channel layer (26) are a heat exchange channel and a heat insulating channel respectively to form the heat exchange surface (21) and the heat insulating surface (22) respectively, and there is a buffer portion (27) between the first channel layer (25) and the second channel layer (26).

13. The battery assembly according to claim 1, wherein a heat conducting element (23) is not provided between the heat insulating surface (22) and the large surface (111) of the single cell (11) on one side away from the heat exchange surface (21).

14. The battery assembly according to claim 1, wherein a heat conducting element (23) is provided between the heat insulating surface (22) and the large surface (111) of the single cell (11) on one side away from the heat exchange surface (21).

15. The battery assembly according to claim 1, wherein at least one of the heat exchange surface (21) and the heat insulating surface (22) is bonded and fixed on the large surface (111) of the single cell (11).

16. The battery assembly according to claim 1, wherein the separation unit (20) is disposed between the two adjacent single cells (11), so that the two opposite large surfaces of the single cell (11) in a middle are respectively in contact with the heat exchange surface (21) and the heat insulating surface (22).

17. The battery assembly according to claim 1, wherein along the stacking direction, at least one of two opposite ends of the battery unit (10) is provided with a heat insulating element (24).

18. The battery assembly according to claim 17, wherein the single cell (11) is a lithium iron phosphate system battery.

19. The battery assembly according to claim 1, wherein along the stacking direction, a heat conducting element (23) and a heat insulating element (24) are respectively disposed at two opposite ends of the battery unit (10).

20. The battery assembly according to claim 1, wherein along the stacking direction, a heat conducting element (23) or a heat insulating element (24) is not disposed at two opposite ends of the battery unit (10).

21. The battery assembly according to claim 1, wherein a heat conducting element (23) is disposed between the adjacent single cells (11), a heat insulating element (24) is disposed between the adjacent single cells (11), and the number of the heat insulating element (24) is less than the number of the heat conducting element (23).

22. The battery assembly according to claim 21, wherein the heat insulating element (24) is not disposed between at least part of the single cells (11) connected in parallel.

23. The battery assembly according to claim 1, wherein the battery assembly further comprises a plurality of single cells (11) arranged in parallel, and a heat insulating element (24) is not disposed between at least part of the single cells (11) connected in parallel.

24. The battery assembly according to claim 23, wherein a heat conducting element (23) is disposed between the single cells (11) connected in parallel.

25. The battery assembly according to any one of claims 21-24, wherein a thickness of the heat insulating element (24) is ≥ 2mm.

26. The battery assembly according to claim 1, wherein the single cell (11) adopts a ternary positive electrode material.
